(19) Europäisches Patentamt

European Patent Office

Office européen des brevets

(11) **EP 2 615 831 A1**

(12) **EUROPEAN PATENT APPLICATION**

(43) Date of publication:
**17.07.2013 Bulletin 2013/29**

(51) Int Cl.:
***H04N 7/18*** (2006.01)  ***H04N 5/232*** (2006.01)

(21) Application number: **12151038.2**

(22) Date of filing: **13.01.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ATS Group (IP Holdings) Limited
Road Town, Tortola (VG)**

(72) Inventor: **Schneider, Michael
64295 Darmstadt (DE)**

(74) Representative: **Zahn, Matthias et al
Peter Bittner und Partner
Seegarten 24
69190 Walldorf (Baden) (DE)**

(54) **Adapting images from moving surveillance cameras for presentation to an operator**

(57)  In a surveillance system (200), a movable camera (210) forwards images to an operator screen (290). A human operator (202) remotely controls (220) the movement of the camera (210). An image adapter (270) receives (410) camera images through a channel (230, 205, 250). The images have a representation (209) of an object under surveillance. The adapter acquires (420) a position change of the camera (210) and modifies (430) the location of the object representation (209) on an operator screen (290). To modify the representation, the adapter (270) introduces a compensating geometric transformation like a location change in a direction that corresponds to the position change of the camera (210). The compensating location change is a function of both the propagation delay time (delta t) that is introduced by the propagation channel and the position change of the camera (210) during that propagation delay time (delta t).

FIG. 2   200

**Description**

**Technical Field**

The description generally relates to image processing, and more particularly relates to image processing for images taken from movable surveillance cameras.

**Background**

Camera surveillance (closed-circuit television, CCTV) plays an important role in security. There are many locations or facilities to be monitored: public places (such as streets, sport stadiums, airports, railway stations or the like) and private places (such as enterprise premises).

Surveillance cameras are mounted inside the facilities (or objects) to be monitored, or in optical viewing distance to them. The cameras present screen images (or pictures or videos) of that objects to human operators. A series of subsequent images provided by the camera is also referred to as video stream. The single images of a video stream are often called frames. The operators are usually located in control rooms at a different place that is usually remote to the object.

Convenient are cameras that are mounted on remote-controlled motorized drives. Using a joystick, the operator can change the position of the camera in several degrees of freedom so that he/she sees different parts of the object. Camera movement changes the camera's field of view that is perceived by the operator as an image. For example, horizontal camera movement (so-called "panning") changes the field of view (and the image) from left to right (or vice versa); vertical camera movement (so-called "tilting") moves it up and down; and changing the focal length ("zooming") narrows or broadens the field of view so that - at least partially - the object appear larger (zoom-in) or smaller (zoom-out).

Most of surveillance cameras are mounted on drives that allow rotating the cameras, so that camera positions can be linked to a panning angle and to a tilting angle (polar coordinates). Both rotation axes can be perpendicular to each other, but that is not required.

The cameras could also be mounted on linear moving supports (such as slides on rails).

The operator in the control room (user interface (UI) with screen and joystick) and the camera (with moving drive) near the object are connected by two communication lines: to communicate the image (picture or video) from the camera to the UI and to communicate control from the UI to the camera support.

However, for a variety of reasons, including cost, quality, media compatibility, and image storage, both lines are usually implemented by a digital network. Encoding and decoding image data is typical for digital networks. The network causes signal propagation delay between camera and control room, for example a delay to propagate images, and a delay to propagate control commands.

The delay of the arriving image may cause disorientation of the operator, especially when the operator lets the camera stop its movement. Such negative effects are known as "overshooting". There is a need to give better orientation to the operator.

**Summary**

In a surveillance system, a movable camera forwards images to an operator screen. A human operator remotely controls the movement of the camera. An image adapter receives camera images through a channel. The images may include a representation of an object under surveillance. The adapter acquires a position change of the camera and modifies the location of the object representation on an operator screen. To modify the representation, the adapter introduces a compensating geometric transformation in a direction that corresponds to the position change of the camera, but with opposite directional sense for vertical and horizontal changes (panning and tilting). In case the change of the view point is caused by a zoom movement, the compensating geometric transformation is a transformation with equal directional sense.

The compensating geometric transformation is a function of both the propagation delay time (delta t) that is introduced by the propagation channel and the position change of the camera during that propagation delay time.

The compensating geometric transformation is building up from the point in time when the acquired change of the view point of the camera indicates an increase of the speed of the camera. In an embodiment, the acquired change of the view point of the camera can indicate that the camera starts moving.

The compensating geometric transformation is being reduced from the point in time when the acquired change of the view point of the camera indicates a decrease of the speed of the camera. In an embodiment, the acquired change of the view point of the camera can indicate that the camera stops moving.

The adapter may take "move" and "stop" commands to the camera into account so that the compensating geometric transformation is increasing when the camera starts moving, but is decreasing when the camera stops moving.

For the camera operator, the screen image appears synchronized to the camera that moves in horizontal or vertical direction.

In other words, the geometric transformation on screen approximates the perspective change that would have been visible to the operator if no delay would exist.

There may be screen areas for which up-to-date image data is not yet available from the camera because of the compensating geometric transformation. Those screen areas can be filled with partial images taken from historic data.

In an alternative embodiment, a real image can be modified for example by scaling up on screen. Scaling up can be performed in the shift direction only; or scaling up can be performed for both coordinate directions on screen: horizontally and vertically. Scaling up in both screen directions preserves the visible width-height ratio for the objects that are represented. Scaling-up can be performed with the centre of the screen as anchor.

In a further alternative embodiment, or in addition to the previously explained embodiment, additional control signals (zoom signals) can be sent to the camera to change its focal length. In that case ("zoom-out"), the camera would provide images of a larger part of the object. Zooming-out could be arranged synchronous to the image scaling (at the screen). In other words, changing the focal length of the camera causes it to provide additional image data that can fill the gap.

In an implementation, a method is executed that processing images from a movable camera for presenting to an operator. In a receiving step, camera images are received through a propagation channel (e.g. with encoder, network, and decoder). The images include an object representation of an object. In an acquiring step, a position change (change of the view point) of the camera is acquired. The position change of the camera can be acquired, for example, by monitoring control signals to the camera, or it can be measured by sensors at the camera. Optionally, mathematical models can be applied to the control signals and or to measurement data. In a modifying step, the location of the object representation on an operator screen is modified by a compensating geometric transformation. The shift is applied to in a direction that corresponds to the position change of the camera. However, the directional sense is opposite for horizontal and vertical movements (panning and tilting). The compensating geometric transformation (for example, location change) is a function of both the propagation delay time that is introduced by the propagation channel and the position change of the camera during that propagation delay time.

Optionally, the acquired position change of the camera can be a change in horizontal direction, a change in vertical direction, or a change in a focal length of the camera. The acquired position change in the horizontal direction or vertical direction can be a rotational direction. In that case, the compensating geometric transformation is a linear location change. The linear location change can be a shift by a number of pixels on screen. Acquiring the change of the position can include monitoring control signals to the camera from a control input that interacts with the operator. For a control signal that starts movement of the camera, the compensating geometric transformation (location change) can have an amount that gradually increases. There is no more increase from the moment by that the movement of the camera has been transmitted to the screen (delta t from movement start). For a control signal that stops movement of the camera, the compensating geometric transformation can have an amount that gradually decreases. For screen areas for that - due to the compensating geometric transformation - image data is not available, the screen area can be filled with partial images taken from historic data. In an alternative, the available image is converted to a modified image by scaling up on screen. In a further alternative, screen areas for that due to the compensating geometric transformation, image data is not available, the camera can be instructed to change its focal length; the additional signals can be zoom signals.

In a different aspect, a computer-program product that - when loaded into a memory of a mobile computer and being executed by at least one processor of the computer - performs the steps of the computer-implemented method.

In a further different aspect, a computer for adapting camera images for presenting to an operator comprises the following units: A receiver unit receives camera images through a propagation channel. The images include an object representation of an object. Camera movement detector acquires a position change of the camera (in other words: a change of camera's view point) . An image shifter modifies a location of the object representation on an operator screen by a compensating geometric transformation (as a location change) in a direction that corresponds to the view point change of the camera, but with opposite directional sense for horizontal and vertical movements (panning and tilting). The compensating location change is a function of both the propagation delay time that is introduced by the propagation channel and the position change of the camera during that propagation delay time.

Optionally, the computer comprises an archive unit and an image generator. For screen areas for that due to the compensating location change, image data is not available, the image generator fills the screen area with historic images from the archive unit. Alternatively, an available image is modified in size, or a camera instructor instructs the camera to change its focal length.

## Brief Description of the Drawings

FIG. 1 illustrates a physical object to be supervised, a camera, and representative images of that object;

FIG. 2 is an overview of a surveillance system;

FIG. 3 illustrates the operation of the system by a timing diagram and by image sequences;

FIG. 4 is a flow chart diagram of a method for processing images from a movable camera for presenting to an operator;

FIG. 5 is a timing diagram of various signals and images in the surveillance system;

FIG. 6AB illustrates an adapted screen presentation to a camera operator;

FIG. 7 is a block diagram of modules in a computer for adapting camera images for presenting to the operator; and

FIG. 8 is a block diagram to illustrate the conversion of an original object flow into a compensated object flow.

## Detailed Description of the Drawings

The description explains the approach by an illustrative scenario. Although the invention is described by way of example, the example is not understood to be limiting in any sense but used only for explaining the conceptual approach. The camera moves horizontally, by rotation so that the panning angle changes. In the example, the tilting angle and the focal length remain unchanged. The camera is, for example, positioned in a sports stadium to monitor visitors on a grandstand. The grandstand has seats and stairs. The operator moves the camera from left to right. On screen, the operator suddenly sees an object of interest, for example a firework. Since this is an unexpected event with a security risk, the operator stops the camera.

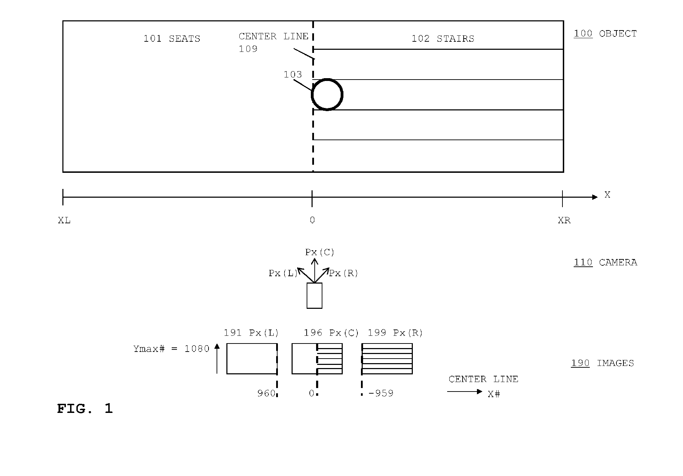

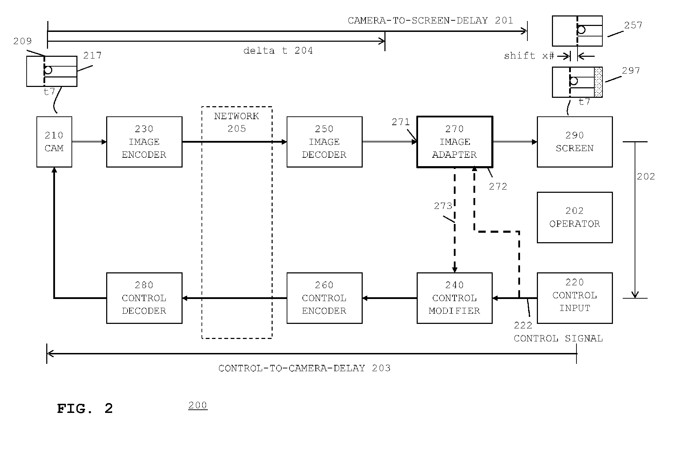

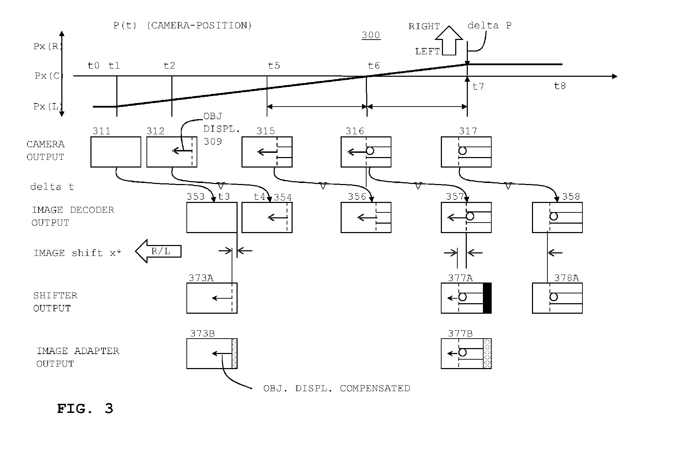

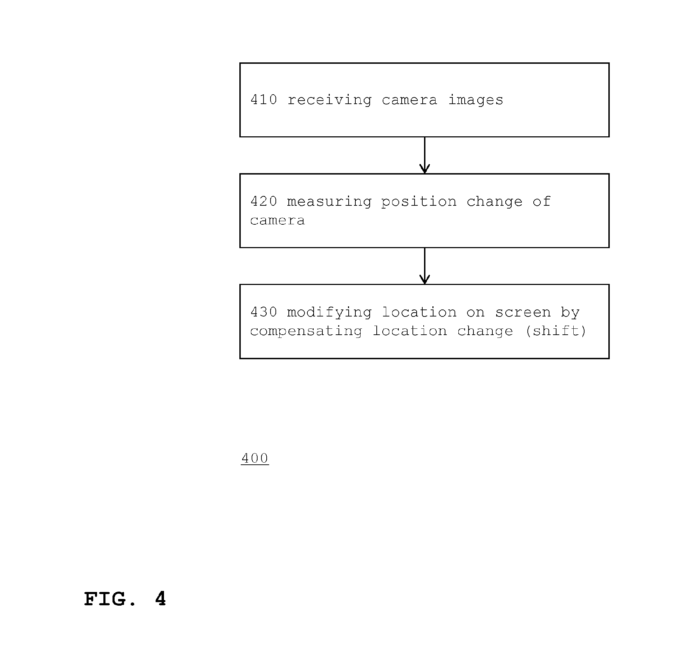

In the description, FIG. 1 introduces coordinate systems, terminology conventions in a relatively static setting. FIG. 2 gives an overview to a surveillance system and introduces more dynamics: camera movement and operator actions. FIG. 3 illustrates images at different points in time and at various parts of the surveillance system. FIGS. 4-8 give implementation details.

FIG. 1 illustrates physical object 100 to be supervised, a camera 110, and representative images 190 of that object.

Since images in a computer are representations of object in the real world, the description uses coordinate systems with correspondence between real world objects and images. The following explains the coordinate systems for object, camera and image.

The object under surveillance has an object size and has object locations, both with Cartesian coordinates (i.e. X, Y-coordinates). Sizes and locations can be measured in meters (m). Object locations refer to a coordinate of a particular part of the object (e.g., the centre part of the object); the object size refers to the dimension of the object (or parts of it).

For example, the upper part of FIG. 1 illustrates a stadium grandstand 100 as the example object. The grandstand has seats 101 on the left side and has stairs 102 on the right side. The stairs are illustrated by horizontal lines. A "seat-stair-border" or centre line 109 is illustrated by a vertical dashed line. Event 103 (e.g., "fire work"), also in the centre, is illustrated by a circle.

Object 100 has a horizontal size of 200 meters (X, or width). Looking at the locations, seats 101 (left) have location coordinates from XL = - 100 m to 0; centre line 109 has location at X = 0, and the stairs have location coordinates from 0 to XR = + 100 m.

Looking at the vertical coordinates, object 100 has vertical location coordinates Y (e.g., from 0 to Ymax). By coordinates, event 103 is located approximately at X = 0 and Y = Ymax/2. Ymax is the height and assumed to be about 56 m.

Camera 110 generates the image. Camera 110 has a horizontal camera position Px(t) (panning position) that can be measured in degrees, a vertical camera position Py(t) (tilting position) that can also be measured in degrees, and a zoom position Ps(t) that can be given by the focal length of the camera, usually measured in millimetres, or that can be given by an object-to-image transfer function (see below). The acronym (t) indicates that the camera is movable so that the camera position depends on the time.

Camera 110 has a viewing angle also measured in degrees, indicating a dimension for objects that can be monitored at a given point in time. The viewing angle can depend on the zoom position. For example, camera 110 can have a 50° viewing angle (at one time). That viewing angle corresponds to 100 meters size of the object; so that at one time, the camera can monitor an object portion that is 100 m wide. The distance between object and camera is assumed to be constant; in case the object would be further away from the camera, the angle-to-size correspondence would change.

As illustrated in the lower part of the figure, at the left position Px(L), camera 110 generates image 191 of the left part of the object (seats only). At the centre position Px(C), camera 110 generates image 196 of the centre part of the object (seats at the left side and stairs at the right side). At the right position, camera 110 generates image 199 of the right part of the object (stairs only).

Images have image sizes and object representation locations that can be given by Cartesian coordinates as well. To distinguish from object coordinates, image coordinates are given with the sign #. Image coordinates (x#, y#) can be measured, for example, in pixels.

The image size is the number of available pixels in horizontal (X) and vertical direction (Y). The image size usually depends on the camera sensor that is used in the camera. In the example, the image size is 1920 x 1080 (X#, Y#). The image size remains constant.

The object-to-image transfer function indicates the relation between object size and object representation size. As mentioned, at one time, the camera can only take an image of one part of the object. In the example, the object representation ratio is about 1 meter (object) to 5 pixels (image). 100 m (XL, seats, or XR stairs) correspond to 1920 pixels, and 56 m (Ymax) correspond to 1080 pixels.

For simplicity, the description assumes a linear relation between object size and object representation size:

$$X \text{ (object size)} = X\# \text{ (size of representation)} * \text{ratio} \qquad (1)$$

The "ratio" could be different for X and for Y, but for simplicity, the ratio is assumed to be the same in both coordinate directions. It is also assumed that the ratio is independent from the camera position Px(t), Py(t), so that parallax or similar errors are neglected.

The ratio is, however, dependent on the zoom position Ps(t);

$$\text{ratio} = \text{zoom factor} * \text{sensor factor} \qquad (2)$$

"Zooming-in" enlarges the image (factor increases), and "zooming-out" shrinks the image (factor decreases) for a particular part of the object. Unless mentioned otherwise, the zoom position Ps(t) should correspond to a zoom factor of 1.

More of interest here is the object representation location on the image. For that, the X#, Y# coordinate system of the image is introduced. The image should have X#-coordinates from X# = - 959 (left) to Y# = +960 (right), and should have Y#-coordinates from 0 to Ymax# = 1080.

For camera position Px(L) (image 191), the centre line has an object representation location at X# = 960, that means the line is located at the right edge of the image.

For camera position Px(C), (image 196), the centre line has the object representation location at x# = 0, that means the line is located at the centre of the image.

For camera position Px(R), (image 199), the centre line has the object representation location at X# = - 959, that means the line is located at the left edge of the image.

Line 109 in the centre of object 100 will be shown inside images on other figures (e.g., in FIGS. 2-4). In that figures - with camera images and screen images - the line will apparently move in X-direction (changes its X#-coordinate, due to panning).

The images will be presented to the operator on the screen. The description assumes a screen that can be described by the coordinate system (X#, Y#) of the images. However, the object representation location will be adapted to the movement of the camera, for example, by shifting the object representation to a new location on screen.

Concerning camera movement, the description now continues with introducing further terms relating to the movement of the camera over time. In FIG. 1 reference numbers 191 and 196 correspond to time points in other figures (e.g., t1 and t6). Movement of the camera is considered to be a change of the camera position in a direction over time

$$dP/dt \qquad (3)$$

The movement can be distinguished into movements along a horizontal direction, a vertical direction and a zoom direction:

$$dPx/dt \qquad (4)$$

$$dPy/dt \qquad (5)$$

$$dPs/dt \qquad\qquad (6)$$

In the example, horizontal movement (panning) goes from left to the right (and vice versa), vertical movement goes up and down (or vice versa) and zoom movement includes "zoom-in" and "zoom-out". A change of the camera position, or a position change is synonymous to a change of the view point of the camera.

Direction senses can be distinguished, for example, horizontal movement have the first directional sense (from left to right) and the second directional sense (from right to left).

In case that the camera moves at constant speed, the movement can be described by

$$delta\ Px\ /\ delta\ t \qquad\qquad (7)$$

$$delta\ Py\ /\ delta\ t \qquad\qquad (8)$$

$$delta\ Ps\ /\ delta\ t \qquad\qquad (9)$$

According to the present invention, the movement of the camera is taken into account in relation to the delay in the signal propagation from the camera to the screen (delta t). The object representation location will be shifted on screen by an amount shift x# (or shift y#, or shift s#) that is related to delta t.

FIG. 2 is an overview to surveillance system 200 with the following components: movable camera 210, image encoder 230, network 205, image decoder 250, image adapter 270, screen 290, control input 220, optional control modifier 240, control encoder 240, and control decoder 280. Arrows between the components illustrate signal flow; double-line arrows merely indicate that some signals are explained with more details in connection with the following figure.

The operation of system 200 is now explained in clockwise order.

Movable camera 210 monitors the object and provides camera image 217. In the example, at time point t7, camera 210 is at a position to monitor the seats (left of centre line 209) and the stairs (right of the line 209), with the (firework) event already occurring. Camera 210 sends video (or picture) signals as camera images to image encoder 230.

Image encoder 230 encodes the signals to digital data packets and forwards the signals to network 205.

Network 205 is implemented, for example, as Local Area Network (LAN), Wireless LAN (WLAN), Wide Area Network, or uses the Internet. Network 205 forwards the digital data packets.

Image decoder 250 receives the digital packets and provides decoder images that are suitable for presenting on a screen. But due to the above-mentioned propagation delay, presenting such images may potentially be confusing to an operator. It is advantageous to adapt the images prior to presenting. This is accomplished by the next component:

Image adapter 270 receives the images (at input 271) and - in case the camera is moving - partially shifts the images in a directional sense that is opposite to the camera movement for horizontal and vertical movements (panning and tilting) and equal to the camera movement for zooming movements. In example, the camera moves from left to right (cf. FIG. 1), there is a shift to the left (shift x#). This shift is conveniently illustrated between the centre lines 209 of images 257 (decoder output) and 297 (adapter output, on screen).

Again, horizontal movement is discussed only. Image adapter 270 is also coupled to control input 220 (at input 272). Image adapter 270 can use the signals of control input 220, for example, to acquire a position of camera 210 from the control signals. There is also an option to couple adapter 270 to control modifier 240 to let camera 210 (via zoom signal 273) deal with effects of the compensating image shift. Image adapter is coupled to screen 290.

Human operator 202 sees the adapted image 297 on screen 290. Adapted image 297 is illustrated at time point t7 showing the representation of the object (with the event) at the location that corresponds to the camera position Px (t7). Optionally, a part of image 297 is a generated image. If needed, operator interacts with the camera via control input 220, for example, to let the camera start moving in a given direction (e.g., left to right), continue moving (in that direction), stop moving or reverse movement direction sense. Optionally, commands to change the movement speed of the camera can also be accepted. Control input 220 provides control signal 222. For example, control input 220 is implemented by a joystick. In the example, operator 202 would press the stick to the right to let control input 220 generate control signal 222 "MOVE RIGHT". In case, operator 202 releases the stick, control signal 222 would change to "STOP".

Optionally, control modifier 240 between control input 220 and control encoder 260 receives zoom signal 273 from image adapter 270, and modifies control signal 222 such that camera 210 provides images from a larger (or smaller) portion of the reality (e.g., by zooming-out, zooming-in).

Control encoder 260 receives control signal 222 from control input 220 (or from control modifier 240) and forwards it in encoded form through network 205.

Control decoder 280 decodes the (encoded) control signal and causes camera 210 to move accordingly.

The figure shows system 200 by example. Various modifications are possible, for example, control input 220 can be implemented by a touch-screen functionality of screen 290, or by an alternative input device (e.g., touch-screen, mouse, and keyboard). Control could also be established, for example, by sensors located at the object, such as smoke detectors, so that in case of an detected event (e.g., the mentioned fireworks), control signals are generated to move the camera into the direction of the event.

In the example, the control signals change the horizontal camera position only, but the control signals can act on the camera to change vertical position (Py, tilt), to change zoom (Ps), focus, brightness, contrast, etc.

FIG. 2 also illustrates delays, camera-to-screen-delay 201 (of image data), operator reaction delay 202 (the operator reacting to presentations on screen), and control-to-camera-delay 203 (of control signals).

For transmitting images, network 205 needs more bandwidth than for transmitting control signals. There are many different approaches known in the art to reduce the bandwidth for the images, so that the encoder/decoder are occupied with image processing such as data compression. Control signals are easier to transmit. Therefore, the camera-to-screen delays are taken into account, but for simplicity of explanation, delays introduced by the image adapter (in any) are neglected. Further for simplicity, the other delays are neglected as well.

Hence, for simplicity of explanation, a delta t can be assumed to be the image transmission delay 204 from camera 210 to image adapter 270.

It may be advantageous to implement image adapter 270, screen 290 and control input 220 by the same computer. In such an implementation, there would be no network and hence no network delays between these components.

FIG. 3 illustrates the operation of the system by timing diagram 300 and image sequences. At the top, diagram 300 shows the horizontal position Px(t) of the camera over time; example images are shown below.

Extreme horizontal positions are Px(L), Px(C), and Px(R) as in FIG. 1. For simplicity it can be assumed that the camera is moving with constant speed, so that relation between position and time is linear. It is assumed that the operator let the camera move from left to right.

The images correspond to various signals of the system (cf. the double-line arrows in FIG. 2): camera images 311, 312, 315, 316 and 317 at the camera output, decoder images 353, 354, 356, 357 and 358 at the decoder output, shifted image 373A, 377A and 378A at a shifter output (part of image adapter) and adapter image 373B and 377B at the image adapter output. The images are just illustrated for explanation, in implementations, only the images of the image adapter would be presented (to the operator).

Looking from the left side to the right side of the figure, the images are given as sequences. Stairs are illustrated by horizontal lines, the vertical dashed "border" line 309 between seats and stairs appears to be moving (arrows). Centre line 309 is shown dashed as an example for the location of the object representation.

At time point t1, the camera is at the left position P(L) and the operator instructs the camera to move to the right (joy stick to "move to right"). The figure is simplified, starting at t1, the graph for Px(t) is rather parabolic then having sharp edges. The corresponding camera image 311 (at the camera output) would show the seats only.

As the camera is moving to the right, more and more stairs would be visible, for example, at t2 with camera image 312.

At time point t3, the image arrives at the decoder output. Arrows between camera images and decoder images indicate the transmission, so that the following images are corresponding: 311/353, 312/354, 315/356, 316/357, and 317/358. The arrows have an (horizontal) length that corresponds to "delta t".

At t6, the camera being at Px(C), the event takes place. Of course, the event is not scheduled, and - as mentioned above - the event takes place at a location that is arbitrarily chosen for simplicity of explanation. Camera image 316 would "see" the seats on the left side, the stairs with the event on the right side, and the event.

At t7, the camera has moved further to the right, and provides camera image 317. Decoder image 357 shows the event for the first time. (Decoder image 357 corresponds to camera image 316). Looking at the delay in more detail, a delay time delta t = t7 - t6 could be calculated. During that time, the camera has moved by a position delta Px.

But at t7, there is more to look at. The operator - seeing the event - likes to focus on the event and is likely to issue a zoom-in-command. Also, the operator would stop the camera moving (e.g., by releasing the joy-stick)

A shifter can be implemented as a function in the image adapter. The shifter has been shifting the decoder images to the left since as soon as the camera has started to move. At t7, decoder image 357 is shifted to the left (opposite to camera movement, by shift x#), and is presented as shifted image 377A. The displacement of shifted image 377A in relation to decoder image 357 corresponds to delta Px.

In the example, delta Px equals to 20 % of the overall position change (Px(L) to Px(R)), e.g., 100°. That would translate to a shift in the image shift by 768 pixels, 20% of 3840). The pixel values are just provided here for explanation, and the pixel values would be different for different camera speed and different delay.

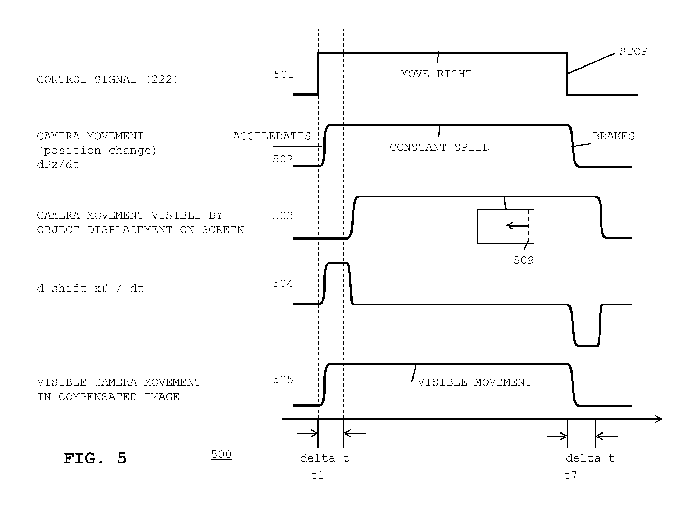

But it can be advantageous to let the amount of shift x# change with the time. This is explained in connection with image 373A (at t3), 377A (at t7) and 378A (at t8). When the operator starts moving the camera, the amount of the shift is being increased, and when the operator stops moving the camera, the amount of the shift is being decreased. (Details for the calculation of the most appropriate shift are given in FIG. 5)

FIG. 4 is a flow chart diagram of method 400 for processing images from a movable camera for presenting to an operator. In a receiving step 410, camera images (311, 312, 315, 316 and 317) are received through a propagation channel (e.g. encoder 230, network 205 and decoder 250). The images include object representation 209 of an object (cf. 100, 109). In an acquiring step 420, a position change (dPx/dt, dPy/dt, dPs/dt) of the camera 210 is acquired. The position change of the camera (change of view point) can be acquired, for example, by monitoring control signals (e.g., control signal 222, from control input 220 and hence from the user), or it can be measured by sensors at camera 210. Optionally, mathematical models can be applied to the control signals and or to measurement data. In a modifying step 430, the location (x#, y#) of the object representation 209 on operator screen 290 is modified by a compensating geometric transformation (e.g., location change, shift x#, shift y#, shift s#). The shift is applied to in a direction that corresponds to the position change of the camera. However, the directional sense is opposite (e.g., camera left to right, shift right to left) for horizontal and vertical movements (panning and tilting). For zooming movements, the directional sense is equal. The compensating location change (shift x#, shift y#, shift s#) is a function of both the propagation delay time (delta t) that is introduced by the propagation channel and the position change of the camera during that propagation delay time (delta t).

As mentioned, the acquired position change of the camera can be a change in horizontal direction (Px, as in the example), a change in vertical direction (Py), or a change in a focal length of the camera (Ps).

The acquired position change (delta Px, delta Py) in the horizontal direction (Px) or vertical direction (Py) can be a rotational direction (camera is rotating by panning and tiling). In that case, the compensating location change (shift x#, shift y#) is a linear location change. The linear location change (shift x#, shift y#) can be a shifted by a number of pixels on screen.

Acquiring 420 the change of the position can include monitoring control signals (cf. signal 222) to the camera from a control input (cf. input 220) that interacts with the operator. For a control signal (222, "move") that starts movement of the camera (210), the compensating location change can have an amount that gradually increases. There is no more increase from the moment by that the movement of the camera has been transmitted to the screen (delta t from movement start). For a control signal (222, "stop") that stops movement of the camera, the compensating location change has an amount that gradually decreases.

For screen areas (cf. 420) for that due to the compensating location change, image data is not available, the screen area can be filled with partial images taken from historic data. In an alternative, the available image (620) is converted to a modified image (630) by scaling up on screen. In a further alternative, screen areas (420) for that due to the compensating location change, image data is not available, the camera (210) is instructed to change its focal length. As details have been explained with FIG. 4, the additional signals (273) are zoom signals.

FIG. 5 is a timing diagram 500 of various signals and images in the surveillance system. Graph 501 illustrates a control signal, similar to control signal 222. At t1, the operator instructs the camera to move to the right, and at t7 (when seeing the event), the operator lets the camera stop moving.

As mentioned, the camera does not start moving immediately, looking at graph 502 that illustrates camera movement, at t1, the camera accelerates. It then moves with substantially constant speed until the stop signal arrives (shortly after t7). The camera then de-accelerates (or "brakes").

Graph 503 illustrates the camera movement on non-adapted images (e.g., at the output of image decoder 250). During a time interval with the duration t7 - t1 (but shifted by delta t), the camera movement would be visible on screen, by displacement of object representations on screen. As an example, centre line 509 is seen as moving to the left (arrow).

Graph 504 illustrates the compensating location change (on screen), but not as shift x# over time, but as the derivative d shift x#/dt. Between t1 and t1+delta t, shift x# is being increased gradually to mimic actual movement of the object representation in the non-delayed camera on the screen. During t1 + delta t to t7, the absolute amount of shift stays constant. From t7 - when the operator lets the camera stop - the shift is gradually being reduced until t7 + delta t. This compensates movement of the object representation in the delayed camera image, which is received for an additional time delta t due to delay, such that the perceived motion of the object representation on the screen (cf. the derivative illustrated in graph 505) stops at t7 (as the camera does, cf. graph 502).

The mathematical function to calculate the amount of the shift is a replica of the mathematical function that approximates the movement behaviour (especially during start/stop) of the camera, including control signal delay.

Graph 505 shows the derivative of the resulting camera movement as it is being presented to the operator on screen. Due to the increasing shift (from t1), the representation of the object on the image seems to be moving (although due to the propagation delay, the image adapter still receives a non-moving object representation). Due to decreasing shift (from t7), the representation of the object seems to be coming to a halt, although due to the propagation delay, a moving object representation is still received. So in other words, a shift is gradually being introduced upon starting the camera to move, and the shift is gradually taken away upon stopping the camera.

FIGS. 6AB illustrate adapted screen presentations 600 to the operator at t7. The calculation time to obtain the image is neglected. The screen could have N pixels in X#-direction (e.g., N = 1920).

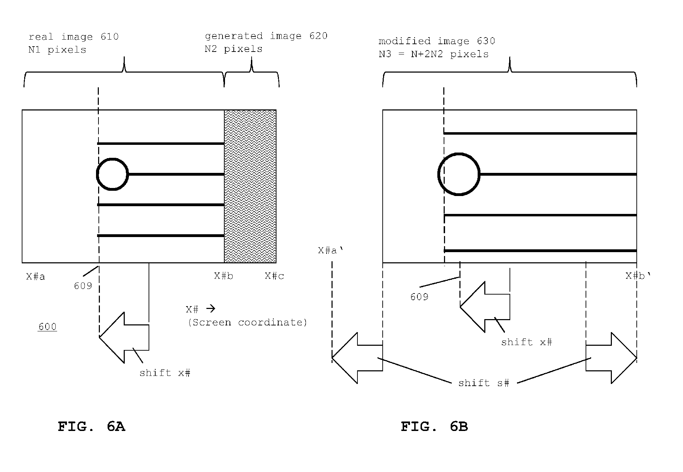

Similar to image 377A (in FIG. 3), the image adapter provides image 610, a "real image" with data from the camera (e.g., N1 pixels, between coordinates X#a and X#b). The image adapter shifts object representation (e.g., centre line 609 for an exemplary location) by shift x#. The gap (or blind spot) for that image data is not yet available from the camera is completed with generated image 620 (FIG. 6A) or with scaled up image 630 (FIG. 6B).

As in FIG. 6A, the gap is filled with generated image 620 (N2 pixels, between X#b and X#c), taken for example from an archive.

As in FIG. 6B, real image 620 is converted to modified image 630, for example by scaling up. In the example, scaling up can correspond to a shift s# to the left and to the right in reference to the centre of the sceen. Looking at the X#-direction, modified image 630 could have N3 pixels. That number N3 corresponds to the overall number of pixels (N) on screen. N3 is larger than N1. The content that is presented is not changed.

Optionally, scaling up can be performed in Y#-direction as well. This is illustrated by space between the "stairs" getting wider between FIG. 6A and FIG. 6B. Scaling up in both screen directions (X# and Y#) preserves the visible width-height ratio for the objects that are represented. Techniques for scaling up are known in the art, for example, as "digital zoom". Scaling down can be introduced likewise.

In other words, real image 620 can be modified for example by scaling up on screen. Scaling up can be performed in the shift direction only (e.g. X#), or scaling up can be performed for both coordinate directions on screen: horizontally (X#) and vertically (Y#). Scaling up can be performed with the centre of the screen as anchor. When the compensating location change is reduced to zero at the end of a camera movement, up-scaling can be gradually reduced to the original scale.

Further, in addition to this, the camera's focal length can be changed to achieve an optical zoom out effect in the image from the camera to be transmitted to compensate effects that are caused by scaling up at the screen. In other words, scaling is done at both ends of the chain, but in opposite directional senses: the camera would zoom out, and the screen image would scale up. The optical impression for the operator would be kept approximately constant. Optical zooming (at the camera) might slightly change the perspective impression, while for digital zooming (at the screen), that change is substantially not to be expected. To change its focal length, additional control signals (cf. signals 273) can be sent to the camera Again, at the end of the camera movement, the original focal length can be restored in parallel to reducing the up-scaling of the presented camera image.

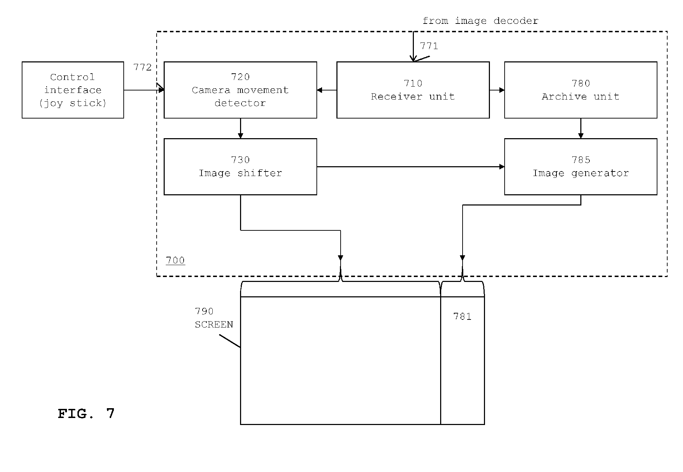

FIG. 7 is a block diagram of modules in a computer 700 for adapting camera images for presenting to the operator. Computer 700 performs the method as explained above for method 400. Computer 700 is a computer that processes images from a movable camera for presenting to an operator. In a surveillance system such as the system that illustrated in FIG. 2, computer 700 can implement the function of the image adapter (270), computer 700 has inputs, output, and peripheral devices that correspond to the image adapter: computer 700 has input 772 to receive control signals (e.g. from a joystick or other control input); has input 771 to receive decoder images (from an image decoder), and has an output coupled to screen 790. (The screen is not necessarily part of the computer).

The computer has receiver unit 710 to receive camera images through a propagation channel (at input 771). The images include an object representation of an object. Camera movement detector 720 acquires a position change of the camera. In the example, detector 720 receives signals from the joystick. As mentioned, the position can also be measured by sensors at the camera. Mathematical models can be applied. Image shifter 730 modifies a location of the object representation on an operator screen by a compensating location change in a direction that corresponds to the position change of the camera, but with opposite directional sense. As mentioned, the compensating location change is a function of both the propagation delay time (delta t) that is introduced by the propagation channel and the position change of the camera during that propagation delay time.

Computer 700 has archive unit 780 and image generator 785. For screen areas 781 for that due to the compensating location change, image data is not available, the image generator 785 filled the screen area 781 with partial images taken from historic data (from archive unit 780). In the alternative, if image data is not available, image shifter 730 (or a different unit) can instruct the camera to change its focal length (for example, by zoom signals).

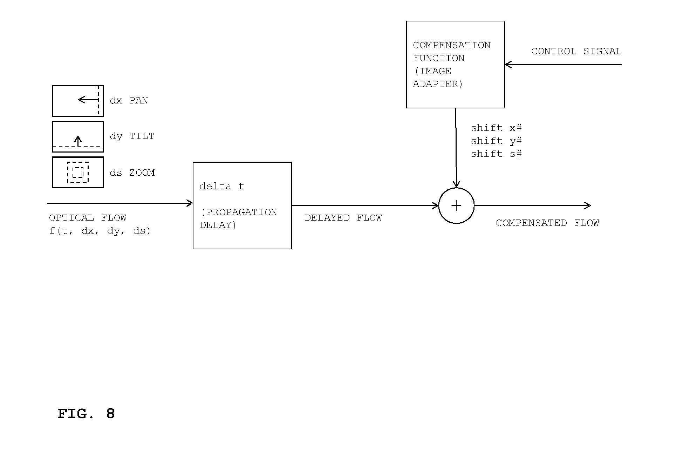

FIG. 8 is a block diagram to illustrate the conversion of an original object flow into a compensated object flow. In other words, an optical flow of the object representation (caused by panning dx#, tilting dy#, or zooming ds#) arrives at the image adapter with a delay (delta t). The delayed flow processed ("+" symbol) by a compensation function to a compensated flow. The resulting compensated flow is presented to the operator.

More in detail, the compensation function depends on a control signal (from the operator) that influences the movement of the camera, and the compensation function is mainly an image shift. The shift corresponds to the direction of optical flow (but in opposite sense): dx# relates to shift x#; dy# relates to shift y# and ds# relates to shift s#.

The present invention can also be described as follows: Control signals influence the camera's field of view. The visual effect of a change of the field of view between two consecutive images can be approximately described by geometric transformations, where panning and tilting correspond to a translation transformation, camera rotation around the optical axis of the camera corresponds to a rotation transformation, and zooming corresponds to a scaling transformation. The expression f(t) should be the geometric transformation that approximates the change in the field of view between the camera image at time t and its predecessor image. Due to a delay in the propagation channel (with an assumed amount of delta t), the translation that is perceived by the operator at time t is not f(t) but f(t-delta t). To present the operator with a correct representation of the actual camera motion, the delayed image is compensated by transforming the image received at time t by a geometric transformation that equals -f(t-delta t)+f(t). The expression -f(t) is the inverse transformation of f(t) and the operator "+" denotes the composition of two transitions. Over time, relative transformations f(t) add up to an absolute compensating transformation g(t) = g(t-1) + f(t), where "t" and "t-1" stands for the points in time for receiving images; "t-1" is prior to "t".

Further, the present invention can also be described as follows: A camera monitors an object and sends images to a screen. The screen presents representations of the object to an operator. The camera is movable upon receiving commands from the operator. When moving, the camera sends images in that the object representation is being moved as well. The camera and corresponding object representations can move horizontally or vertically. Or, the camera can move by changing its focal length so that the object representation (on screen) is becoming larger (zoom in) or smaller (zoom out). The camera can also move by rotating around the optical axis through the lenses.

However, a communication channel between camera and screen delays sending images by a channel-delay time (delta t). As a result, the corresponding movement of the object representations (on screen) are not synchronous to the camera movement. When the camera starts moving (or moves faster), the object representation is not yet moving (or moving at the original speed). When the camera stops moving (or moves more slowly), the object representation is still moving (or moving at the original speed).

To countermeasure such effects, an image adjuster is coupled to the screen. The image adjuster receives information regarding the movement of the camera (from the operator, or by monitoring the camera movement). The image adjuster provides a compensating transformation to the representation of the object on screen. The compensating transformation corresponds to the movement pattern of the camera (horizontal, vertical or zoom movement, or rotation).

Looking at time points, the compensating transformation starts building up from the moment (t1) in that the camera starts moving (or moves faster). The compensating transformation reaches a steady amount after a time interval that corresponds to the channel-delay. The compensating transformation stays in the steady amount as long as the camera is moving at unchanged speed. The compensating transformation starts being reduced from the moment (cf. t7) in that the camera stops moving (or moves more slowly). The compensating transformation is no longer available from that "stop" moment plus the channel delay time.

The description closes with further discussions. The presented approach is not limited to surveillance. There are other applications, such as movie or television productions. For video conferencing, the conference participants act as camera operators. Camera movement is not limited to panning, tilting or zooming. As mentioned, the camera as a whole, or the sensor inside the camera might rotate around the optical axis of the lenses. In that case, with "r" for rotation, a position change could be described by dPr/dt; persons of skill in the art can apply the teachings of this descriptions.

Embodiments of the invention can be implemented in digital electronic circuitry, or in computer hardware, firmware, software, or in combinations of them. The invention can be implemented as a computer program product, i.e., a computer program tangibly embodied in an information carrier, e.g., in a machine-readable storage device, for execution by, or to control the operation of, data processing apparatus, e.g., a programmable processor, a computer, or multiple computers. A computer program, can be written in any form of programming language, including compiled or interpreted languages, and it can be deployed in any form, including as a standalone program or as a module, component, subroutine, or other unit suitable for use in a computing environment. A computer program can be deployed to be executed on one computer or on multiple computers at one site (e.g., in the vehicle) or distributed across multiple sites (e.g. central computer) and interconnected by a communication network. The methods can all be executed by corresponding computer products on the respective devices.

Method steps of the invention can be performed by one or more programmable processors executing a computer program to perform functions of the invention by operating on input data and generating output. Method steps can also be performed by, and an apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Such storage devices may also be provisioned on demand and be accessible through the Internet (Cloud Computing). Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a liquid crystal display (LCD) monitor, for displaying information to the user and an input device such as a keyboard, touchscreen or touchpad, a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Mobile devices can be, for example, smart phones, tablet PCs or any other handheld computing device. The components of the system can be interconnected by any form or medium of digital data communication, e.g., a communication network. Examples of communication networks include a local area network (LAN) and a wide area network (WAN), e.g., the Internet or wireless LAN or telecommunication networks. The computing system can include clients and servers. A client and server are generally remote from each other and typically interact through a communication network. The relationship of client and server arises by virtue of computer programs running on the respective computers and having a client-server relationship to each other.

**Claims**

1. Method (400) for processing images from a movable camera (210) for presenting to an operator (202), the method (400) comprising:

   receiving (410) camera images (311, 312, 315, 316, 317) through a propagation channel (230, 205, 250), the images with an object representation (209) of an object (100, 109);
   acquiring (420) a change of the view point of the camera (dPx/dt, dPy/dt, dPs/dt) of the camera (210); and
   modifying (430) a location (x#, y#, s#) of the object representation (209) on an operator screen (290) by a compensating geometric transformation (shift x#, shift y#, shift s#) in a direction that corresponds to the change of the view point of the camera (210).

2. Method according to claim 1, wherein the compensating geometric transformation is a transformation with opposite directional sense (R/L) in case the change of the view point is in horizontal or in vertical direction.

3. Method according to claim 1, wherein the compensating geometric transformation is a transformation with equal directional sense in case the change of the view point is caused by a zoom movement.

4. Method (400) according to any of claim 1 to 3, wherein the compensating geometric transformation (shift x#, shift y#, shift s#) is a function of both the propagation delay time (delta t) that is introduced by the propagation channel (230, 205, 250) and the change of the view point of the camera (210) during that propagation delay time (delta t).

5. Method (400) according to any of claims 1 to 4, wherein the compensating geometric transformation is building up from the point in time (t1) when the acquired change of the view point of the camera indicates an increase of the speed of the camera.

6. Method (400) according to any of claims 1 to 5, wherein the compensating geometric transformation is being reduced from the point in time (t7) when the acquired change of the view point of the camera indicates a decrease of the speed of the camera.

7. Method (400) according to any of claim 1 to 6, wherein the acquired change of the view point of the camera (210) is a change in horizontal direction (Px), a change in vertical direction (Py), or a change in a focal length of the camera (Ps).

8. Method (400) according to any of claims 1 to 7, wherein for a control signal (222, "move") that starts movement of the camera (210), the compensating geometric transformation has an amount that gradually increases; and for that for a control signal (222, "stop") that stops movement of the camera (210), the compensating geometric transformation has an amount that gradually decreases.

9. Method (400) according to any of claims 1 to 8, wherein for screen areas (420) for that due to the compensating location change, image data is not available, the screen area (420) is filled with partial images taken from historic data.

10. Method (400) according to any one of claims 1 to 9, wherein for screen area (420) for that due to the compensating geometric transformation, image data is not available, the available image (620) is converted to a modified image (630) by scaling up on screen.

11. Method (400) according to any of claims 1 to 10, wherein for screen areas (420) for that due to the compensating geometric transformation, image data is not available, the camera (210) is instructed to change its focal length.

12. Computer-program product that - when loaded into a memory of a computer and being executed by at least one processor of the computer - performs the steps of the computer-implemented method according to any of claims 1 to 11.

13. Computer (700) for adapting camera images for presenting to an operator, the computer comprising: a receiver unit (710) to receive camera images through a propagation channel, the images including an object representation of an object; a camera movement detector (720) to acquire a change of the view point of the camera; an image shifter (730) to modify a location of the object representation on an operator screen by a compensating geometric transformation in a direction that corresponds to the position change of the camera.

14. Computer (700) according to claim 13, further comprising an archive unit (780) and an image generator (785), wherein for screen areas for that due to the compensating location change, image data is not available, the image generator (785) fills the screen area with historic images from the archive unit 780).

15. Computer (700) according to any of claims 13 to 14, further comprising a camera instructor, wherein for screen areas for that due to the compensating location change, image data is not available, the camera instructor instructs the camera to change its focal length.

101 SEATS     CENTER LINE     102 STAIRS     100 OBJECT
109

103

XL     0     X     XR

Px(C)

Px(L)     Px(R)

110 CAMERA

191 Px(L)    196 Px(C)   199 Px(R)

Ymax# = 1080

190 IMAGES

960     0.     -959

CENTER LINE

X#

**FIG. 1**

CAMERA-TO-SCREEN-DELAY 201

209

delta t 204

257

shift x#

217

t7

297

t7

210
CAM

230
IMAGE
ENCODER

NETWORK
205

250
IMAGE
DECODER

271

270
IMAGE
ADAPTER

272

290
SCREEN

202

273

202
OPERATOR

280
CONTROL
DECODER

260
CONTROL
ENCODER

240
CONTROL
MODIFIER

220
CONTROL
INPUT

222
CONTROL SIGNAL

CONTROL-TO-CAMERA-DELAY 203

FIG. 2          200

P(t) (CAMERA-POSITION)

300

RIGHT

LEFT

delta P

Px(R)

t0 t1     t2          t5          t6                    t7          t8

Px(C)

Px(L)

OBJ
DISPL.
309

311        312        315        316        317

CAMERA
OUTPUT

delta t

353  t3    t4  354    356        357        358

IMAGE DECODER
OUTPUT

IMAGE shift x*    R/L

373A                          377A        378A

SHIFTER
OUTPUT

373B                          377B

IMAGE ADAPTER
OUTPUT

OBJ. DISPL. COMPENSATED

**FIG. 3**

15

```
┌─────────────────────────────────────────┐
│                                         │
│  410 receiving camera images            │
│                                         │
└─────────────────────────────────────────┘
                     │
                     ▼
┌─────────────────────────────────────────┐
│                                         │
│  420 measuring position change of       │
│  camera                                 │
│                                         │
└─────────────────────────────────────────┘
                     │
                     ▼
┌─────────────────────────────────────────┐
│                                         │
│  430 modifying location on screen by    │
│  compensating location change (shift)   │
│                                         │
└─────────────────────────────────────────┘
```

400

FIG. 4

CONTROL SIGNAL (222)          501          MOVE RIGHT                    STOP

CAMERA MOVEMENT      ACCELERATES                                        BRAKES
(position change)             502          CONSTANT SPEED
dPx/dt

CAMERA MOVEMENT VISIBLE BY    503
OBJECT DISPLACEMENT ON SCREEN

                                                                        509

d shift x# / dt              504

VISIBLE CAMERA MOVEMENT       505              VISIBLE MOVEMENT
IN COMPENSATED IMAGE

**FIG. 5**          500          delta t              delta t
                                t1                   t7

real image 610
N1 pixels

generated image 620
N2 pixels

modified image 630
N3 = N+2N2 pixels

X#a

609

600

X#b    X#c

X# →
(Screen coordinate)

shift x#

X#a`

609

X#b`

shift x#

shift s#

**FIG. 6A**

**FIG. 6B**

from image decoder

Control interface (joy stick)

772

720
Camera movement detector

771

710
Receiver unit

780
Archive unit

730
Image shifter

785
Image generator

700

790
SCREEN

781

FIG. 7

dx PAN

dy TILT

ds ZOOM

OPTICAL FLOW
f(t, dx, dy, ds)

delta t

(PROPAGATION
DELAY)

DELAYED FLOW

COMPENSATION
FUNCTION
(IMAGE
ADAPTER)

CONTROL SIGNAL

shift x#
shift y#
shift s#

+

COMPENSATED FLOW

FIG. 8

Europäisches
Patentamt

European
Patent Office

Office européen
des brevets

# EUROPEAN SEARCH REPORT

Application Number

EP 12 15 1038

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 312 766 B1 (EDWARDS ERIC C [CA]) 25 December 2007 (2007-12-25) * column 5, line 11 - column 6, line 59 * * column 9, line 37 - line 56 * ----- | 1-15 | INV. H04N7/18 H04N5/232 |
| A | GB 2 433 173 A (BOSCH GMBH ROBERT [DE]) 13 June 2007 (2007-06-13) * abstract * * * paragraph [0003] - paragraph [0004] * * paragraph [0023] * * paragraph [0032] - paragraph [0039] * * figures 1-3 * ----- | 1-15 | |

TECHNICAL FIELDS
SEARCHED      (IPC)

H04N

The present search report has been drawn up for all claims

| Place of search | Date of completion of the search | Examiner |
|---|---|---|
| The Hague | 18 June 2012 | Van der Zaal, Robert |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 12 15 1038

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2012

| Patent document cited in search report | | Publication date | Patent family member(s) | | Publication date |
|---|---|---|---|---|---|
| US 7312766 | B1 | 25-12-2007 | NONE | | |
| GB 2433173 | A | 13-06-2007 | GB<br>US | 2433173 A<br>2006203098 A1 | 13-06-2007<br>14-09-2006 |

EPO FORM P0459

For more details about this annex : see Official Journal of the European Patent Office, No. 12/82